# EUROPEAN PATENT APPLICATION

(11) **EP 1 315 097 A1**
(43) Date of publication of application: **28.05.2003**
(21) Application number: 01204458.2
(22) Date of filing: 22.11.2001
(51) Int. Cl.: G06F 17/30, G06F 3/033

(54) **Client-oriented information system**

(71) Applicant: Oracle International Corporation, Redwood Shores, CA 94065 (US)
(72) Inventor: Van Domburg, Ricardo Elco, 3842 AS Harderwijk (NL)
(74) Representative: Van Breda, Jacques

(57) **Abstract**

Client-oriented information system comprising a computer, a monitor connected to the computer and software operational on the computer for retrieval of information from a data base, which software includes a navigational tree displayed on the monitor for supporting the said information retrieval, wherein the navigational tree displayed on the monitor embodies both static and dynamic information. The static information relates to one or more clients and the dynamic information relates to jobs or tasks performed or to be performed on behalf of such clients. The navigational tree is accessible at a preselected level of static information below a top level.

## Description

The invention relates to a client-oriented information system comprising a computer, a monitor connected to the computer and software operational on the computer for retrieval of information from a data base, which software includes a navigational tree displayed on the monitor for supporting the said information retrieval.

Such a system is known from practice and is used by applicant's field service engineers. The system is intended to provide field service personnel with tools required to know the customer and the job to be done for such customer, as well as reporting work done for the customer.

Existing information systems are bothersome to use by reason that such known systems require laborious navigating in order to retrieve the required information and in order to input information into the system for reporting or for later use.

The invention aims to make life easier for the users of the information system specified in the preamble.

The information system according to the invention is to that end characterized in that the navigational tree displayed on the monitor embodies both static and dynamic information. This type of presentation of the information disclosed to the system's user reduces the amount of actions to be performed in order to arrive at the information sought for. The system according to the invention allows for easy navigating to the concerning information.

The benefits of the information system according to the invention are particularly available in such system wherein the static information relates to one or more clients and the dynamic information relates to jobs or tasks performed or to be performed on behalf of such clients.

Advantageously, the navigational tree is accessible at a preselected level of static information below a top level.

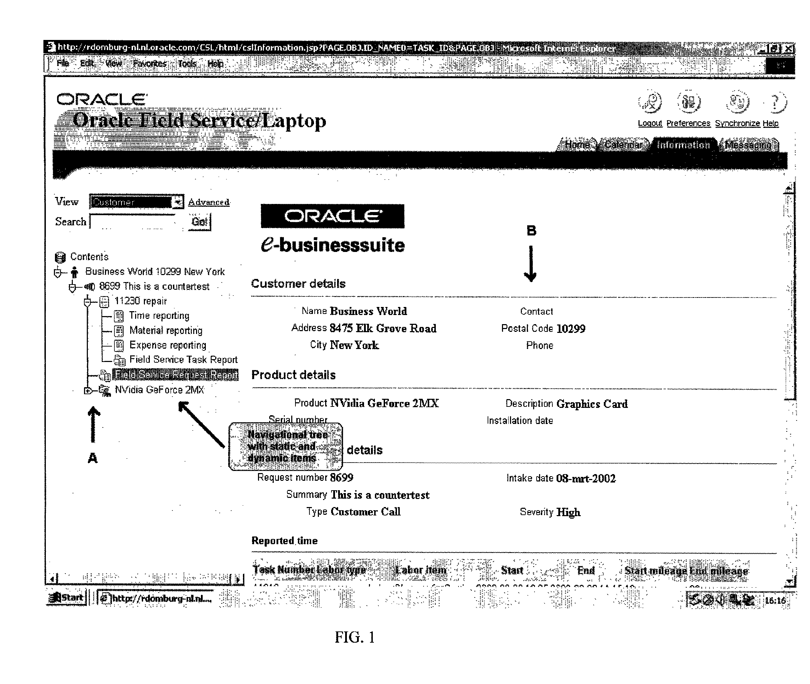

The invention will now further be elucidated with reference to Fig. 1 showing an example of information displayed on a monitor of an information system according to the invention at a particular stage of navigating through the information data base of the system.

On the left-hand side of the display identified with arrow A, the navigational tree of the system is displayed with the concerning static and dynamic information that are interrelated shown in combination. The information shown pertains for instance to the client Business World located in Birmingham. The same information with reference to this client is displayed in the right-hand part B of the monitor in more detail.

Further information pertaining to this particular client relates to for instance earlier service requests that have been issued, i.e. requests of June 28, 2001 (request No. 8881) and July 27, 2001 (request Nos. 11296 and 11289).

Further detailing of request No. 8881 is provided in the same navigational tree and relates to the time spent on servicing request No. 8881 and the material and expenses used for dealing with this request.

It is clear to the expert that the navigational tree can be expanded with any further items that one wishes to include.

The software supporting access to the data base embodying the information displayed, allows further for a quick access to any required level below the level identifying the particular client. If a user when looking at the shown display of information relating to job No. 8881, wishes to switch over to a report concerning job No. 11289, this can be done by simply clicking on the concerning icon which is placed in front of No. 11289.

It is further clear to the expert that numerous variations are feasible within the scope and spirit of the invention as specified in the appended claims. The protection pertaining to the invention is defined by the appended claims only.

## Claims

1. Client-oriented information system comprising a computer, a monitor connected to the computer and software operational on the computer for retrieval of information from a data base, which software includes a navigational tree displayed on the monitor for supporting the said information retrieval, **characterized in that** the navigational tree displayed on the monitor embodies both static and dynamic information.

2. Information system according to claim 1, wherein the static information relates to one or more clients and the dynamic information relates to jobs or tasks performed or to be performed on behalf of such clients.

3. Information system according to claim 1 or 2, wherein the navigational tree is accessible at a preselected level of static information below a top level.
